# FASCICULE DE BREVET EUROPEEN

(11) **EP 1 695 302 B1**
(45) Date de publication et mention de la délivrance du brevet: **22.08.2007**
(21) Numéro de dépôt: 04816385.1
(22) Date de dépôt: 15.12.2004
(51) Int. Cl.: G07G 1/00

(54) **DISPOSITIF ET PROCEDE D'ENCAISSEMENT A CAPTURE D'IMAGE D'IDENTITE**
BEZAHLUNGSEMPFANGSEINRICHTUNG UND VERFAHREN MIT IDENTIFIKATIONSBILD-ERFASSUNG
PAYMENT-RECEIVING DEVICE AND METHOD WITH IDENTIFICATION IMAGE CAPTURE

(30) Priorité: 16.12.2003 FR 0314705
(43) Date de publication de la demande: 30.08.2006
(73) Titulaire: Infomil, 31100 Toulouse (FR)
(72) Inventeur: POINTEAU, Marcel, F-31400 Toulouse (FR); CAZALBOU, Jean-Claude, F-31100 Toulouse (FR); DARGELOS, Denis, F-31270 Cugnaux (FR)
(74) Mandataire: Cabinet BARRE LAFORGUE & associés
(86) Numéro de dépôt international: PCT/FR2004/003233
(87) Numéro de publication internationale: WO 2005/059852

(56) Documents cités:
- EP-A- 1 041 523
- US-A- 4 658 126
- US-A- 4 933 536
- US-A1- 2003 128 866

## Description

L'invention concerne un dispositif et un procédé d'encaissement des achats d'articles effectués par des clients dans un magasin.

Lorsqu'un client règle un achat avec un chèque bancaire, l'employé réalisant l'encaissement (caissière) doit demander systématiquement au client une pièce d'identité, dont il doit noter, généralement au dos du chèque, la nature (carte d'identité, passeport, permis de conduire ...), le numéro et éventuellement d'autres données (date d'émission, lieu d'émission ...). De la sorte, en cas d'impayé du chèque, il est possible de retrouver a posteriori l'identité de la personne qui a émis le chèque, et d'éviter toute contestation à ce sujet.

Néanmoins, ces opérations manuelles sont relativement longues et peuvent gréver sensiblement les temps d'attente en caisse. Effectuées rapidement par les employés, il arrive que les informations écrites au dos du chèque soient incomplètes ou illisibles au moins en partie, de sorte qu'il ne soit plus ensuite possible, en pratique, de retrouver l'identité de la personne. En outre, le fait même que l'employé vérifie et écrive lui-même les références du document d'identité est de nature à créer un climat de suspicion et à être mal vécu par le client qui peut en prendre ombrage.

Et, compte tenu de la diversité des documents d'identité pouvant être présentés (permis de conduire, passeports, diverses cartes d'identité ...), et du fait que seules certaines informations extraites du document d'identité doivent être saisies, l'automatisation de ces opérations pose problème.

US 2003/0128866 décrit un système permettant notamment de faciliter ces opérations, en imprimant des données biométriques du client au dos du chèque. Ces données peuvent être lues par un scanner sur une carte d'identité présentée par le client. Ce système est conçu pour permettre la vérification d'identitié du client en temps réel lors du paiement et pour assurer ensuite que cette vérification a été faite. Néanmoins, son utilisation n'est possible qu'à condition d'être en possession du chèque. Dès lors, il n'est pas ultérieurement possible, sans être en possession du chèque, notamment après sa destruction, de vérifier l'identité de la personne qui a émis le chèque, ni le fait que son identité a bien été vérifiée lors du paiement.

Or, les inventeurs ont déterminé que de telles vérifications a posteriori devraient être possibles sans être en possession du chèque. En effet, les besoins de vérification se font sentir dans des lieux, à des moments et par des organismes qui peuvent ne pas être en possession du chèque, voire même après la destruction physique du chèque.

L'invention vise donc à pallier ces inconvénients en proposant un dispositif et un procédé d'encaissement grâce auxquels les opérations de saisie d'informations concernant les documents d'identité présentés par les clients sont facilitées et accélérées, ne nécessitent pas la réalisation d'écritures manuelles de la part des employés d'encaissement, peuvent être au moins pour partie automatisées au bénéfice d'une plus grande rapidité, d'une meilleure fiabilité et d'un meilleur ressenti de la part des clients, et permettent ensuite de vérifier sans être en possession du chèque d'une part, que la vérification d'identité a été faite lors du paiement, et d'autre part, l'identité de la personne qui a fourni le chèque.

L'invention vise de surcroît à permettre d'atteindre ce but de façon simple, économique, et compatible avec tous les types de documents d'identité pouvant exister.

Pour ce faire, l'invention concerne un dispositif d'encaissement des achats d'articles effectués par des clients dans un magasin comprenant :
- des moyens de saisie et d'enregistrement en mémoire de masse (mémoire permanente telle que disque dur ou support d'enregistrement (disque, disquette, cassette, ...)), de données numériques, dites données chèques, représentatives d'un chèque de paiement fourni par un client à titre de règlement d'un achat,
- des moyens de capture et d'enregistrement en mémoire de masse d'au moins une image numérique, dite image d'identité, représentant au moins une partie d'un document d'identité présenté par un client lors d'un paiement par chèque,
caractérisé en ce qu'il comprend :
- des moyens de création et d'enregistrement en mémoire de masse d'un lien associant chaque image d'identité avec les données chèques correspondantes.

L'invention s'étend à un procédé d'encaissement des achats d'articles effectués par des clients dans un magasin dans lequel on saisit et on enregistre en mémoire de masse des données numériques, dites données chèques, représentatives d'un chèque de paiement fourni par un client à titre de règlement d'un achat, on capture et on enregistre en mémoire de masse au moins une image numérique, dite image d'identité, représentant au moins une partie d'un document d'identité présenté par un client lors d'un paiement par chèque,
caractérisé en ce que :
- on crée et on enregistre en mémoire de masse un lien logique associant chaque image d'identité à des données chèques correspondantes.

Ainsi, avec un dispositif et un procédé selon l'invention, la saisie manuelle des informations relatives au document d'identité de l'émetteur du chèque n'est plus nécessaire. Il est en outre possible de déterminer l'identité de la personne qui a payé avec le chèque sans être en possession du chèque lui-même.

L'invention est particulièrement avantageuse dans un dispositif d'encaissement comprenant aussi des moyens de saisie et d'enregistrement en mémoire de masse de données numériques, dites données tickets, représentatives de l'achat du client. Le dispositif selon l'invention est alors aussi caractérisé en ce qu'il comprend des moyens de création et d'enregistrement en mémoire de masse d'un lien logique associant les données tickets avec l'image d'identité (et donc aussi avec les données chèques). Et le procédé selon l'invention est avantageusement caractérisé en ce qu'on saisit et on enregistre en mémoire de masse des données numériques, dites données tickets, représentatives de l'achat du client et en ce qu'on crée et on enregistre en mémoire de masse un lien logique associant les données tickets avec l'image d'identité.

Les moyens de capture de l'image d'identité peuvent faire l'objet de très nombreux modes de réalisation différents. A ce titre, on peut utiliser tout dispositif connu, quelle que soit sa technologie de fonctionnement, pour capturer une image numérique. Il peut s'agir notamment d'une caméra numérique (de type à capteur CCD ou CMOS (par exemple telle qu'une "WEBCAM")), d'un appareil photo numérique (à capteur CCD ou CMOS), d'un lecteur optoélectronique à balayage (par déplacement du document devant une barrette de capteur optique, ou par déplacement du capteur devant le document)...

Avantageusement et selon l'invention le dispositif est aussi caractérisé qu'il comprend au moins une ligne d'encaissement comportant :
- un lecteur de codes portés par les articles, et une caméra numérique de contrôle adaptée pour réaliser des prises de vue des articles après lecture et enregistrement des codes des articles achetés,
- des moyens de commande de la caméra numérique de contrôle pour la capture d'une image d'identité.

Autrement dit, on utilise la caméra numérique de contrôle, normalement destinée à contrôler le fait que les codes de tous les articles achetés ont bien été saisis, pour capturer chaque image d'identité.

La capture de chaque image d'identité peut être déclenchée soit sur commande d'un employé d'encaissement (caissière), soit automatiquement. Dans le premier cas, les moyens de capture de l'image d'identité comportent des moyens de déclenchement de prise de vue par un employé d'encaissement. Dans le deuxième cas, les moyens de capture de l'image d'identité sont du type à déclenchement automatique.

Avantageusement, dans un procédé selon l'invention, on réalise au moins une prise de vue représentant tout ou partie du document d'identité. Préférentiellement, selon l'invention, on réalise plusieurs prises de vue du document d'identité que l'on enregistre et associe en mémoire de masse en tant qu'image d'identité, et lesdits moyens de capture du dispositif selon l'invention sont adaptés à cet effet.

Avantageusement; les moyens de capture comportent des moyens de positionnement/guidage du document d'identité par rapport à un bâti fixe. De la sorte, l'employé d'encaissement n'a pas à réaliser de réglage pour effectuer la capture de l'image d'identité, le document d'identité étant parfaitement placé par rapport à ces moyens de capture par simple mise en place dans les moyens de positionnement/guidage.

Dans un mode de réalisation avantageux conforme à l'invention, le dispositif est caractérisé en ce qu'il comprend une pluralité de terminaux d'encaissement formant chacun une ligne d'encaissement, reliés sur un réseau doté d'au moins un serveur de contrôle ayant au moins une mémoire de masse dans laquelle (dans lesquelles) est mémorisée une base de données d'enregistrement de l'activité des différents terminaux de caisse, et en ce que les différentes images d'identité mémorisées au cours des achats des clients sont associées à cette base de données. Les différentes images d'identité peuvent être associées à la base de données en tant que fichiers différents de ceux constituant la base de données (des liens étant définis et enregistrés dans la base de donner pour pointer vers ces fichiers images d'identité) ; ou en tant qu'objets incorporés dans cette base de données. Il en va de même des liens associant chaque image d'identité avec les données chèques.

II est à noter que dans tout le texte, l'expression "base de données" désigne tout système d'enregistrement de données organisé selon une structure pouvant être définie indépendamment de la valeur des données. Cette expression englobe tous les modes de réalisation possibles de l'enregistrement physique de ces données et/ou de cette structure en mémoire de masse, à savoir notamment à l'aide d'un système de gestion de base de données (SGBD), en tables et lignes et/ou en fichiers et enregistrements (système de fichiers), ou autre.

L'invention concerne également un dispositif et un procédé caractérisé en combinaison par tout ou partie des caractéristiques mentionnées ci-dessus ou ci-après.

D'autres buts, avantages et caractéristiques de l'invention apparaîtront à la lecture de la description suivante qui se réfère aux figures annexées illustrant un mode de réalisation de l'invention donné uniquement à titre d'exemple non limitatif, et dans lesquels :
- la figure 1 est un schéma illustrant un exemple d'architecture informatique d'un dispositif d'encaissement selon l'invention,
- la figure 2 est un schéma synoptique illustrant partiellement un exemple d'organisation de données dans une base de données d'un serveur d'un dispositif selon l'invention,
- la figure 3 est un schéma synoptique donnant un exemple de chronologie d'étapes d'un procédé selon l'invention,

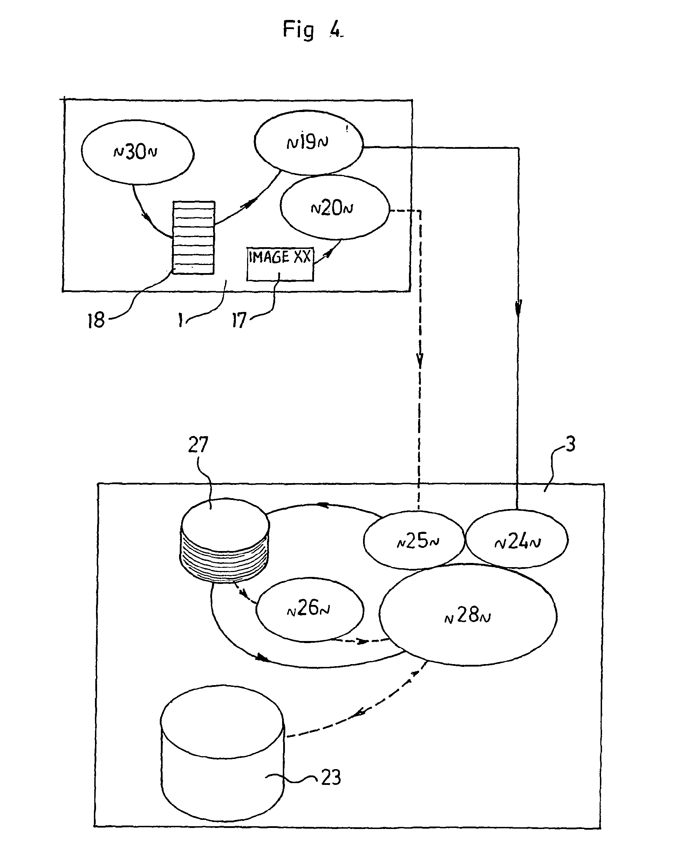

- la figure 4 est un schéma synoptique illustrant les échanges entre un terminal d'encaissement et un serveur dans un dispositif selon l'invention.

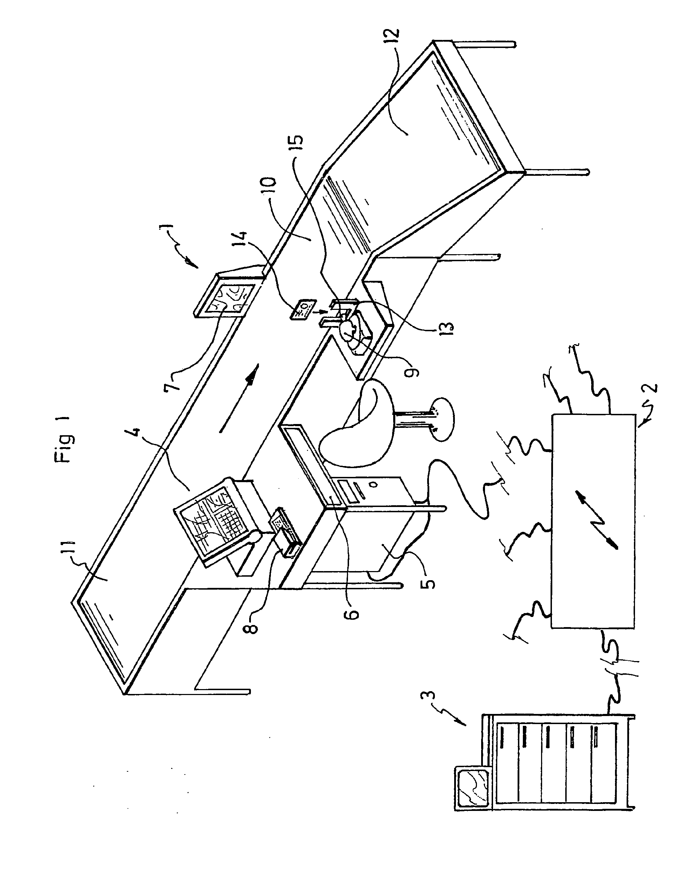

Dans l'exemple représenté figure 1, le dispositif d'encaissement comprend une pluralité de terminaux d'encaissement 1 (un seul étant représenté figure 1) formant chacun une ligne d'encaissement pour le passage des clients en vue de l'enregistrement et du règlement de leurs achats dans un magasin de type libre-service. L'invention est néanmoins également applicable à d'autres types d'architecture, par exemple dans le cas où le magasin comprend un seul terminal d'encaissement formé d'un dispositif informatique unique, sans réseau.

Les différents terminaux d'encaissement 1 sont reliés sur un réseau 2 informatique qui est également doté d'au moins un serveur de contrôle 3 dans lequel peuvent être centralisées des données en provenance des différents terminaux d'encaissement 1.

Chaque terminal d'encaissement est essentiellement constitué d'un dispositif informatique comprenant une unité centrale 5 dotée de façon traditionnelle d'une carte mère, d'un bus de fond de panier et de différentes cartes accessoires, notamment pour la connexion de périphériques dont une mémoire de masse, par exemple sous le forme d'un disque dur. A cette unité centrale 5 sont reliés une interface homme-machine, par exemple sous la forme d'un écran tactile 4, un tiroir-caisse 6, un lecteur optoélectronique 7 de codes articles, par exemple un scanner de codes à barres EAN, un dispositif 8 pour imprimer les chèques et lire des données numériques, dites données chèques, portées par chacun des chèques de paiement présentés par un client à titre de règlement d'un achat.

Les données chèques peuvent comprendre, pour chaque chèque, par exemple un numéro de compte bancaire et un numéro de chèque. Ces numéros peuvent être codés sur une piste, par exemple du type correspondant à la norme CMC7, portée par le chèque. Le dispositif 8 comprend des moyens de lecture de cette piste permettant de lire les numéros portés par le chèque, et de les enregistrer en tant que données chèques, dans la mémoire de masse du terminal d'encaissement et/ou dans une autre mémoire de masse reliée au terminal d'encaissement par le réseau 2 (par exemple celle du serveur de contrôle 3).

De tels dispositifs 8 d'impression/lecture de chèques, permettant d'imprimer les chèques et de lire les pistes des chèques sont bien connus (par exemple modèle EDICHEC® commercialisé par INGENICO (Paris/France) ; ou TM - H6000 - MICR commercialisé par EPSON (Japon)).

Le terminal d'encaissement 1 comprend en outre un tapis transporteur 10 défilant, facilitant les manipulations de l'employé d'encaissement pour passer chaque article déposé par un client à l'entrée 11 du tapis devant le lecteur optoélectronique 7 puis vers la sortie 12 du tapis pour l'emballage des articles achetés dans des sacs. Le terminal d'encaissement 1 comprend aussi une caméra numérique 9 de contrôle des articles achetés disposée à l'aval (par rapport au sens de défilement du tapis 10) du lecteur optoélectronique 7.

Comme représenté schématiquement figure 1, un cadre 13 de guidage est placé devant la caméra 9, à une distance appropriée de son objectif pour permettre la réalisation correcte d'une image d'un document 14 d'identité pouvant être placé dans ce cadre 13. Le cadre 13 définit une fenêtre 15 centrale en regard de l'objectif de la caméra 9 et comprend avantageusement des montants et/ou traverses en forme de glissières en U pour guider et recevoir les bords du document d'identité 14. Le cadre 13 peut être constitué par exemple comme représenté, de deux montants latéraux verticaux et d'une traverse inférieure, de sorte que le document d'identité 14 peut être introduit par le haut dans ce cadre 13. En variante non représentée, le cadre pourrait être constitué de deux traverses supérieure et inférieure et d'un seul montant latéral, le document d'identité étant introduit latéralement dans le cadre.

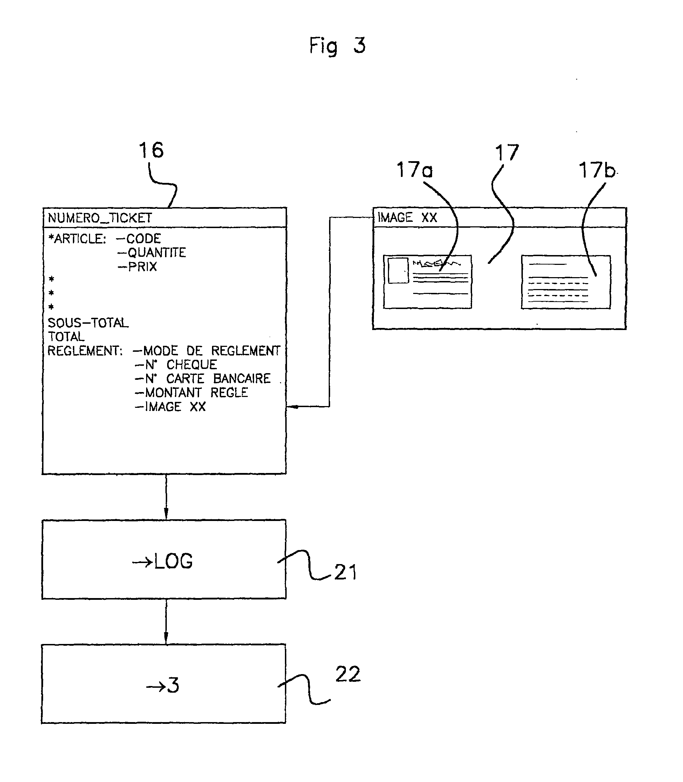

Comme représenté figure 3, lorsqu'un client se présente au terminal 1, une étape d'enregistrement 16 se déroule au fur et à mesure du passage des différents articles devant le lecteur optoélectronique 7. Lors de cette étape d'enregistrement 16, le terminal d'encaissement 1 affecte un numéro de ticket à suivre NUMERO-TICKET, mémorise les différents articles achetés saisis par le lecteur optoélectronique 7 avec, pour chaque article acheté, son code article, éventuellement d'autres informations associées (par exemple l'identification de l'article), la quantité achetée et son prix. Les informations relatives à chaque article peuvent être extraites par le terminal d'encaissement 1 d'un fichier ou d'une base de données centralisé(e) sur le réseau 2, par exemple enregistré(e) dans un serveur de gestion du magasin relié au réseau 2, ce serveur pouvant être identique ou différent du serveur 3 de contrôle.

Le terminal d'encaissement 1 effectue aussi de façon traditionnelle lors de l'étape d'encaissement 16, un ou plusieurs sous-totaux, le total des achats, puis enregistre les données relatives au règlement de ces achats. Ces données comportent notamment le mode de règlement, le numéro du chèque présenté ou de la carte bancaire présentée, le montant réglé par ce règlement. Conformément à l'invention, lorsque le client paye par chèque, ce dernier présentant un document d'identité 14, on capture et on mémorise une image d'identité 17 en présentant le document d'identité 14 dans le cadre 13 et en déclenchant une prise de vue par la caméra 9. Ce déclenchement peut être entièrement automatique, la caméra 9 détectant la présence d'un document dans le cadre 13. Il existe en effet des appareils de prise de vue ou caméra dotés de moyens de détection d'un objet à une distance prédéterminée dans leur champ d'observation. De tels moyens de détection peuvent être réalisés entièrement par voie logicielle, par exemple la caméra 9 étant en permanence active et incorporant un logiciel d'analyse d'images. Ils peuvent aussi en variante être réalisés par un détecteur d'objets à une distance prédéterminée, par exemple un télémètre laser.

En variante, le déclenchement de la prise de vue peut être effectué par l'employé d'encaissement lui-même. Pour ce faire, lorsque le client présente un chèque, ce dernier est placé par l'employé d'encaissement dans le lecteur de chèques 8 qui d'une part imprime les données correspondantes sur le chèque, et, d'autre part, lit et mémorise les données chèques, c'est-à-dire les données bancaires correspondant au chèque. Le terminal d'encaissement 1 peut être programmé pour que lorsqu'un chèque est placé dans ce dispositif 8 lecteur de chèques, un bouton de déclenchement de prise de vue soit émulé sur l'écran tactile 4. Le document d'identité 14 est alors présenté par le client à l'employé d'encaissement qui, dans une première étape, vérifie que ce document d'identité 14 correspond bien d'une part au chèque qui a été présenté, et, d'autre part, au client lui-même (comparaison des photographies). L'employé d'encaissement place alors le document d'identité 14 dans le cadre 13 et actionne le bouton de déclenchement émulé sur l'écran tactile 4.

L'image d'identité 17 associée à chaque chèque peut être formée d'une seule prise de vue, ou au contraire de plusieurs prises de vue 17a, 17b. Dans l'exemple représenté l'image d'identité 17 comprend deux prises de vue 17a, 17b correspondant aux vues recto et verso d'une carte d'identité.

En tout état de cause, une image d'identité 17 est capturée, saisie et mémorisée par le terminal d'encaissement 1, notamment sur sa mémoire de masse qui, traditionnellement, peut être formée d'un disque dur. Cette image d'identité peut être mémorisée sous la forme d'un fichier image (comprenant une ou plusieurs images numériques) dont la référence IMAGE XX est incorporée dans les données de règlement enregistrées dans le ticket lors de l'étape d'enregistrement 16.

A la fin de cette étape d'enregistrement 16, l'ensemble de l'achat du client est représenté par un ensemble de données numériques, dites données tickets représentées figure 3. Chaque enregistrement de données tickets correspondant à un ticket est mémorisé par le terminal d'encaissement 1 dans un fichier journal 18 enregistré sur le disque dur du terminal d'encaissement 1. Dans chaque terminal d'encaissement 1, il existe en effet un tel fichier journal 18 qui répertorie tous les événements se produisant sur ce terminal, dont notamment l'enregistrement des données tickets par un processus d'encaissement 30.

Egalement, chaque terminal d'encaissement 1 comprend un processus 19, généralement exécuté en fond de tâche en temps réel, pour envoyer chaque ticket enregistré sur le réseau 2 à destination du serveur de contrôle 3. Selon l'invention, ce processus 19 d'envoi des données tickets est associé à un processus 20 effectué simultanément pour envoyer le fichier image IMAGE XX mémorisant l'image d'identité 17 sur le réseau 2 à destination du serveur de contrôle 3. Ainsi, simultanément à l'envoi des données tickets (comprenant les données chèques), le fichier image IMAGE XX est adressé au serveur de contrôle 3 par le terminal d'encaissement 1. Il est à noter que l'envoi du fichier image est effectué sur le réseau 2 avec un protocole différent de celui des données tickets. En effet, les données tickets sont envoyées en tant que données directement sur le réseau 2, tandis que le fichier de l'image d'identité 17 est envoyé par un protocole d'envoi de fichiers, par exemple de type FTP.

Ainsi, comme représenté figure 3, après l'étape d'enregistrement 16, après la détection de la fin du ticket, il est procédé, par le terminal d'encaissement 1, à l'étape subséquente 21 d'écriture des données tickets dans le fichier journal 18, puis à l'étape 22 d'envoi des données tickets et du fichier de l'image d'identité 17 au serveur 3.

Le serveur 3 comprend une base de données 23 dans laquelle peuvent être mémorisées toutes les informations correspondant aux différents achats effectués dans le magasin. Ce serveur 3 exécute un processus 24 de réception des données tickets qui permet de les enregistrer sur sa mémoire de masse, notamment en mettant à jour la base de données 23. Le serveur 3 comprend également un processus 25, associé à ce processus 24, permettant de recevoir les fichiers images IMAGE XX contenant des images d'identité 17 et de les enregistrer sur la mémoire de masse de ce serveur 3, par exemple en tant que fichiers d'images 27.

Le serveur 3 comprend aussi un processus 28 de consolidation adapté pour mettre à jour la base de données 23 régulièrement en y incorporant les données tickets reçues, et en créant des liens avec les fichiers d'images 27 correspondant aux données chèques des données tickets, ces liens étant mémorisés dans la base de données 23. Le processus 28 de consolidation peut, en variante, directement incorporer dans la base de données 23, en tant qu'objets de cette base de données, les images identité 17 contenues dans les fichiers images IMAGE XX qu'elle reçoit et/ou dans les fichiers d'images 27 correspondants mémorisés sur la mémoire de masse du serveur 3.

Selon une autre variante de réalisation, un processus 26 peut être prévu pour analyser l'image d'identité 17 et en extraire les données pertinentes intéressantes. De tels processus 26 d'analyse d'image et d'extraction de données, par exemple de données textes à partir d'une image brute, sont connus en eux-mêmes. Par exemple, on pourra extraire de l'image identité le nom, le prénom, le numéro du document d'identité, son type, la photographie et la signature.

En pratique, une telle extraction de données n'est néanmoins pas nécessaire ni en général utile puisqu'il suffit d'enregistrer l'image identité 17 elle-même, avec une résolution juste suffisante pour permettre la lecture des données principales d'identité contenues dans cette image identité 17. Compte tenu des capacités actuelles des mémoires de masse et des possibilités notamment de compression de données, il est possible en pratique d'enregistrer directement l'intégralité de l'image d'identité dans la base de données 23.

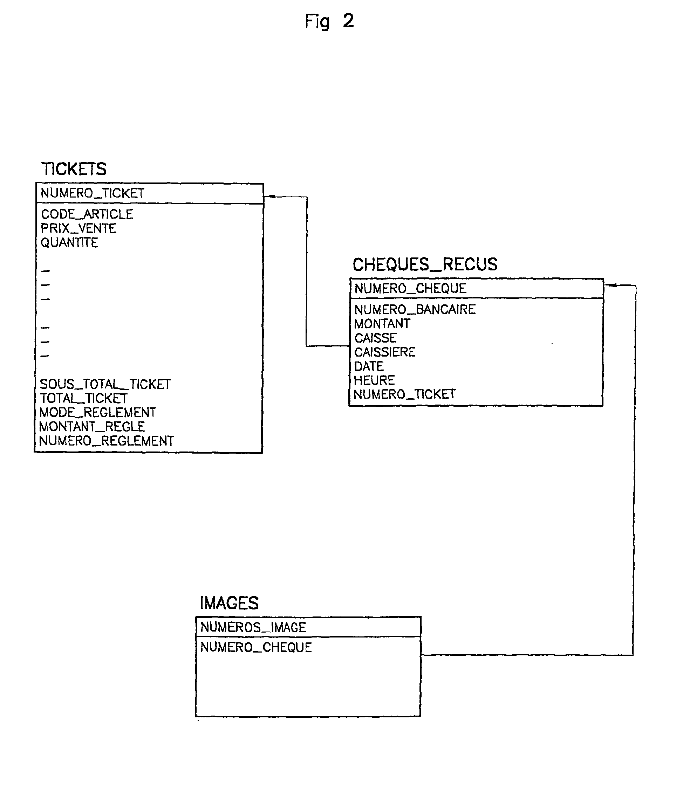

La figure 2 représente un exemple d'organisation des données sur la base de données 23, en ce qui concerne la mise en oeuvre de l'invention.

Seules les caractéristiques de cette base de données 23 propres à l'invention sont représentées et décrites ci-après. Les autres caractéristiques de cette base de données, notamment pour l'enregistrement des données tickets, sont bien connues et ne sont pas décrites en détail.

Dans l'exemple décrit ci-après, la base de données est présentée en tables et lignes. Comme indiqué précédemment d'autres représentations ou modes d'enregistrement physique sont possibles (fichiers et enregistrements ...).

Cette base de données comprend une table TICKETS ayant une clé définie par le champ NUMERO_TICKET. Chaque enregistrement comprend les champs CODE_ARTICLE, PRIX_VENTE, QUANTITE, et ce autant de fois qu'il y a d'articles saisis, puis les champs SOUS_TOTAL_TICKET, TOTAL_TICKET, MODE_REGLEMENT, MONTANT_REGLE, et NUMERO_REGLEMENT.

Les données comprennent également une table CHEQUES_REÇUS comprenant comme clé le champ NUMERO_CHEQUE identifiant un enregistrement de données chèques. Chaque enregistrement comprend un champ NUMERO_BANCAIRE (dans lequel est enregistré le numéro bancaire du chèque), et les champs MONTANT, CAISSE, CAISSIERE, DATE, HEURE et NUMERO_TICKET. Enfin, une table IMAGES permet de répertorier les différentes images d'identité. Cette table comprend comme clé le champ NUMEROS_IMAGE, et chaque enregistrement comprend le champ NUMERO_CHEQUE permettant de relier les données chèques à chaque image d'identité identifiées par son numéro.

Le contenu de chacun des champs décrits ci-dessus est identifié par le nom de chacun de ces champs.

Les différentes tables TICKETS, CHEQUES_REÇUS et IMAGES sont liées les unes aux autres, de sorte qu'un lien logique est établi dans la base de données 23 entre chaque image d'identité et les données chèques et les données tickets correspondantes.

Lorsque le magasin reçoit une information de la part de la banque selon laquelle un chèque est impayé, il suffit qu'il consulte la base de données 23 en effectuant une sélection appropriée à partir du numéro bancaire du chèque pour retrouver immédiatement les données tickets et les données chèques correspondantes, et également l'image d'identité 17 qui fournira les données de vérification permettant de prouver si le chèque a été ou non émis par le titulaire du compte bancaire.

Le processus 19 d'envoi du ticket examine les données tickets et, dans le cas où celles-ci comprennent une référence de fichier d'image IMAGE XX dans les données de règlement, active le processus 20 d'envoi de l'image d'identité vers le serveur 3. Ainsi, l'existence d'une référence de fichier image dans les données de règlement d'un ticket constitue un lien logique qui permet d'associer un fichier image constituant une image d'identité 17 aux données chèques correspondantes.

Egalement, ce lien logique se trouve mémorisé dans le serveur 3, dans la base de données 23, grâce aux différentes tables comme indiqué ci-dessus. Pour ce faire, le processus 24 de réception de tickets examine si dans les données tickets, il existe également une référence de fichier image IMAGE XX. Dans l'affirmative, il active le processus 25 de réception d'image et réalise les enregistrements correspondants dans la base de données 23 pour que le lien logique existe entre le NUMERO_IMAGE identifiant l'image identité 17, les données chèques correspondantes, et les données tickets correspondantes.

L'invention peut faire l'objet de très nombreuses variantes de réalisation par rapport au mode de réalisation préférentiel représenté sur les figures et décrit ci-dessus.

## Revendications

1. Dispositif d'encaissement des achats d'articles effectués par des clients dans un magasin comprenant :
- des moyens (18) de saisie et d'enregistrement en mémoire de masse, de données numériques, dites données chèques, représentatives d'un chèque de paiement fourni par un client à titre de règlement d'un achat,
- des moyens (9) de capture et d'enregistrement en mémoire de masse d'au moins une image numérique, dite image d'identité (17), représentant au moins une partie d'un document d'identité (14) présenté par un client lors d'un paiement par chèque,
**caractérisé en ce qu'**il comprend:
- des moyens de création et d'enregistrement en mémoire de masse d'un lien associant chaque image d'identité (17) avec les données chèques correspondantes.

2. Dispositif selon la revendication 1, **caractérisé en ce qu'**il comprend :
- des moyens (1, 7) de saisie et d'enregistrement en mémoire de masse de données numériques, dites données tickets, représentatives de l'achat du client,
- des moyens de création et d'enregistrement en mémoire de masse d'un lien logique associant les données tickets avec l'image d'identité.

3. Dispositif selon l'une des revendications 1 ou 2, **caractérisé en ce que** les moyens (9) de capture de l'image d'identité sont choisis parmi :
- une caméra numérique,
- un appareil photo numérique,
- un lecteur optoélectronique à balayage.

4. Dispositif selon l'une des revendications 1 à 3, **caractérisé en ce qu'**il comprend au moins une ligne d'encaissement comportant :
- un lecteur (7) de codes portés par les articles, et une caméra numérique (9) de contrôle adaptée pour réaliser des prises de vue des articles après lecture et enregistrement des codes des articles achetés,
- des moyens de commande de la caméra (9) numérique de contrôle pour la capture d'une image d'identité (17).

5. Dispositif selon l'une des revendications 1 à 4, **caractérisé en ce que** les moyens (9) de capture de l'image d'identité (17) comportent des moyens (4) de déclenchement de prise de vue par un employé d'encaissement.

6. Dispositif selon l'une des revendications 1 à 4, **caractérisé en ce que** les moyens (9) de capture de l'image d'identité (17) sont du type à déclenchement automatique.

7. Dispositif selon l'une des revendications 1 à 6, **caractérisé en ce que** les moyens (9) de capture de l'image d'identité (17) sont adaptés pour capturer et mémoriser en association une pluralité de prises de vue (17a, 17b) formant une même image d'identité (17).

8. Dispositif selon l'une des revendications 1 à 7, **caractérisé en ce que** les moyens (9) de capture comportent des moyens (13) de positionnement/guidage du document d'identité par rapport à un bâti fixe.

9. Dispositif selon l'une des revendications 1 à 8, **caractérisé en ce qu'**il comprend une pluralité de terminaux d'encaissement (1) formant chacun une ligne d'encaissement, reliés sur un réseau (2) doté d'au moins un serveur de contrôle (3) ayant au moins une mémoire de masse dans laquelle (dans lesquelles) est mémorisée une base de données (23) d'enregistrement de l'activité des différents terminaux de caisse (1), et **en ce que** les différentes images d'identité (17) mémorisées au cours des achats des clients sont associées à cette base de données (23).

10. Procédé d'encaissement des achats d'articles effectués par des clients dans un magasin dans lequel on saisit et on enregistre en mémoire de masse des données numériques, dites données chèques, représentatives d'un chèque de paiement fourni par un client à titre de règlement d'un achat, on capture et on enregistre en mémoire de masse au moins une image numérique, dite image d'identité (17), représentant au moins une partie d'un document d'identité (14) présenté par un client lors d'un paiement par chèque,
**caractérisé en ce que** :
- on crée et on enregistre en mémoire de masse un lien logique associant chaque image d'identité (17) à des données chèques correspondants.

11. Procédé selon la revendication 10, **caractérisé en ce qu'**on saisit et on enregistre en mémoire de masse des données numériques dites données tickets, représentatives de l'achat du client et **en ce qu'**on crée et on enregistre en mémoire de masse un lien logique associant les données tickets avec l'image d'identité (17).

12. Procédé selon l'une des revendications 10 ou 11, **caractérisé en ce que** la capture de l'image d'identité (17) est déclenchée sous commande d'un employé d'encaissement.

13. Procédé selon l'une des revendications 10 ou 11, **caractérisé en ce que** la capture de l'image d'identité (17) est déclenchée automatiquement.

14. Procédé selon l'une des revendications 10 à 12, **caractérisé en ce qu'**on réalise au moins une prise de vue (17a, 17b) représentant toute une face du document d'identité (14).

15. Procédé selon l'une des revendications 10 à 13, **caractérisé en ce qu'**on réalise plusieurs prises de vues (17a, 17b) du document d'identité (14) que l'on mémorise et associe en mémoire de masse en tant qu'image d'identité (17).

16. Procédé selon l'une des revendications 10 à 14, **caractérisé en ce que** sur au moins une ligne d'encaissement, on réalise des prises de vue des articles à l'aide d'une caméra (9) numérique de contrôle après lecture de codes sur les articles achetés, et **en ce qu'**on utilise cette caméra (9) numérique de contrôle pour la capture de l'image d'identité (17).

## Claims

1. Device for collecting on article purchases made by customers in a shop, comprising:
- means (18) for entering and recording in mass memory digital data, called cheque data, representing a cheque for payment supplied by a customer to pay for a purchase,
- means (9) for capturing and recording in mass memory at least one digital image, called the identity image (17), representing at least part of an identity document (14) which is presented by a customer when he or she pays by cheque,
**characterized in that** it comprises:
- means for creating and recording in mass memory a link associating each identity image (17) with corresponding cheque data.

2. Device according to Claim 1, **characterized in that** it comprises:
- means (1, 7) for entering and recording in mass memory digital data, called ticket data, representing the customer's purchase,
- means for creating and recording in mass memory a logical link associating the ticket data with the identity image.

3. Device according to one of Claims 1 or 2, **characterized in that** the means (9) for capturing the identity image are chosen from:
- a digital camera,
- a digital photographic device,
- a scanning opto-electronic reader.

4. Device according to one of Claims 1 to 3, **characterized in that** it comprises at least one collection line, including:
- a reader (7) of codes which are carried on the articles, and a monitoring digital camera (9) which is suitable for making photographs of the articles after the codes of the purchased articles are read and recorded,
- means for controlling the monitoring digital camera (9) to capture an identity image (17).

5. Device according to one of Claims 1 to 4, **characterized in that** the means (9) for capturing the identity image (17) include means (4) for activating the photography by a collection employee.

6. Device according to one of Claims 1 to 4, **characterized in that** the means (9) for capturing the identity image (17) are of the type for automatic activation.

7. Device according to one of Claims 1 to 6, **characterized in that** the means (9) for capturing the identity image (17) are suitable for capturing and recording, in association, a plurality of photographs (17a, 17b) forming a single identity image (17).

8. Device according to one of Claims 1 to 7, **characterized in that** the means (9) of capture include means (13) for positioning/guiding the identity document relative to a fixed frame.

9. Device according to one of Claims 1 to 8, **characterized in that** it comprises multiple collection terminals (1) each forming a collection line, linked to a network (2) which is equipped with at least one control server (3) having at least one mass memory, in which a database (23) for recording the activity of the various till terminals (1) is recorded, and **in that** the various identity images (17) which are recorded in the course of purchases by customers are associated with this database (23).

10. Method of collecting on article purchases made by customers in a shop, in which digital data, called cheque data, representing a cheque for payment supplied by a customer to pay for a purchase, is entered and recorded in mass memory, at least one digital image, called the identity image (17), representing at least part of an identity document (14) which is presented by a customer when he or she pays by cheque, is captured and recorded in mass memory,
**characterized in that**:
- a logical link associating each identity image (17) with corresponding cheque data is created and recorded in mass memory.

11. Method according to Claim 10, **characterized in that** digital data, called ticket data, representing the customer's purchase, is entered and recorded in mass memory, and **in that** a logical link associating the ticket data with the identity image (17) is created and recorded in mass memory.

12. Method according to one of Claims 10 or 11, **characterized in that** the capture of the identity image (17) is activated under the control of a collection employee.

13. Method according to one of Claims 10 or 11, **characterized in that** the capture of the identity image (17) is activated automatically.

14. Method according to one of Claims 10 to 12, **characterized in that** at least one photograph (17a, 17b) representing a whole face of the identity document (14) is made.

15. Method according to one of Claims 10 to 13, **characterized in that** multiple photographs (17a, 17b) of the identity document (14) are made, and are recorded and associated in mass memory as an identity image (17).

16. Method according to one of Claims 10 to 14, **characterized in that** on at least one collection line, photographs of articles are made using a monitoring digital camera (9) after reading codes on the purchased articles, and **in that** this monitoring digital camera (9) is used to capture the identity image (17).

## Patentansprüche

1. Kassiereinrichtung für Einkäufe von Artikeln, die von Kunden in einem Geschäft getätigt wurden, mit:
- Eingabe- und Registriermitteln (18) in einem Massenspeicher von digitalen Daten, so genannten Scheckdaten, die einen von einem Kunden für die Bezahlung eines Einkaufs übergebenen Scheck darstellen,
- Erfassungs- und Registriermitteln (19) in einem Massenspeicher von mindestens einem digitalen Bild, einem so genannten Identifikationsbild (17), das mindestens einen Teil einer Identitätsunterlage (14) darstellt, die von einem Kunden bei einem Einkauf per Scheck vorgelegt wird,
**dadurch gekennzeichnet, dass** sie
- Erstellungs- und Registriermittel in einem Massenspeicher einer Verbindung umfasst, die jedes Identifikationsbild (17) den entsprechenden Scheckdaten zuordnet.

2. Einrichtung nach Anspruch 1, **dadurch gekennzeichnet, dass** sie
- Eingabe- und Registriermittel in einem Massenspeicher von digitalen Daten, so genannten Kassenscheindaten, umfasst, die den Einkauf des Kunden darstellen,
- Erstellungs- und Registriermittel in einem Massenspeicher einer logischen Verbindung umfasst, die die Kassenscheindaten dem Identifikationsbild zuordnen.

3. Einrichtung nach einem der Ansprüche 1 oder 2, **dadurch gekennzeichnet, dass** die Erfassungsmittel (9) des Identifikationsbilds gewählt werden zwischen:
- einer Digitalkamera,
- einem digitalen Fotoapparat,
- einem optoelektronischen Tastlesegerät.

4. Einrichtung nach einem der Ansprüche 1 bis 3, **dadurch gekennzeichnet, dass** sie mindestens ein Kassiersystem aufweist, mit:
- einem Lesegerät (7) von auf den Artikeln vermerkten Codes, und einer digitalen Prüfkamera (9), die geeignet ist, um Aufnahmen von den Artikeln nach dem Lesen und Registrieren der Codes der gekauften Artikel zu machen,
- Steuermitteln der digitalen Prüfkamera (9) für die Erfassung eines Identifikationsbilds (17).

5. Einrichtung nach einem der Ansprüche 1 bis 4, **dadurch gekennzeichnet, dass** die Erfassungsmittel (9) des Identifikationsbilds (17) Auslösemittel (4) für die Aufnahme durch einen Kassenangestellten umfassen.

6. Einrichtung nach einem der Ansprüche 1 bis 4, **dadurch gekennzeichnet, dass** die Erfassungsmittel (9) des Identifikationsbilds (17) automatisch ausgelöst werden.

7. Einrichtung nach einem der Ansprüche 1 bis 6, **dadurch gekennzeichnet, dass** die Erfassungsmittel (9) des Identifikationsbilds (17) geeignet sind, um gleichzeitig mehrere Aufnahmen (17a, 17b) zu erfassen und zu speichern, die ein einziges Identifikationsbild (17) bilden.

8. Einrichtung nach einem der Ansprüche 1 bis 7,
**dadurch gekennzeichnet, dass** die Erfassungsmittel (9) Positionierungs-/Führungsmittel (13) der Identitätsunterlage in Bezug auf ein festes Gestell umfassen.

9. Einrichtung nach einem der Ansprüche 1 bis 8,
**dadurch gekennzeichnet, dass** sie Kassier-Endgeräte (1) umfasst, die jeweils ein Kassiersystem bilden und an einem Netz (2) angeschlossen sind, das mindestens einen Kontrollserver (3) umfasst mit mindestens einem Massenspeicher, in dem (in denen) eine Datenbank (23) für die Registrierung der Aktivität der einzelnen Kassier-Endgeräte (1) gespeichert ist, und dass die einzelnen, während der Einkäufe der Kunden gespeicherten Identifikationsbilder (17) dieser Datenbank (23) zugeordnet sind.

10. Kassierverfahren für Einkäufe von Artikeln, die von Kunden in einem Geschäft getätigt wurden, bei dem man in einem Massenspeicher digitale Daten, so genannte Scheckdaten, eingibt und registriert, die einen von einem Kunden für die Bezahlung eines Einkaufs übergebenen Scheck darstellen, man in einem Massenspeicher mindestens ein digitales Bild, ein so genanntes Identifikationsbild erfasst und registriert, das mindestens einen Teil einer Identitätsunterlage (14) darstellt, die von einem Kunden bei einem Einkauf per Scheck vorgelegt wird,
**dadurch gekennzeichnet, dass**
- man in einem Massenspeicher eine logische Verbindung erstellt und registriert, die jedes Identifikationsbild den entsprechenden Scheckdaten zuordnet.

11. Verfahren nach Anspruch 10, **dadurch gekennzeichnet, dass** man in einem Massenspeicher digitale Daten, so genannte Kassenscheindaten, eingibt und registriert, die den Einkauf des Kunden darstellen, und dass man in einem Massenspeicher eine logische Verbindung erstellt und registriert, die die Kassenscheindaten dem Identifikationsbild (17) zuordnen.

12. Verfahren nach einem der Ansprüche 10 oder 11, **dadurch gekennzeichnet, dass** die Erfassung des Identifikationsbilds (17) von einem Kassenangestellten ausgelöst wird.

13. Verfahren nach einem der Ansprüche 10 oder 11, **dadurch gekennzeichnet, dass** die Erfassung des Identifikationsbilds (17) automatisch ausgelöst wird.

14. Verfahren nach einem der Ansprüche 10 bis 12, **dadurch gekennzeichnet, dass** man mindestens eine Aufnahme (17a, 17b) macht, die die gesamte Fläche der Identitätsunterlage (14) darstellt.

15. Verfahren nach einem der Ansprüche 10 bis 13, **dadurch gekennzeichnet, dass** man mehrere Aufnahmen (17a, 17b) der Identitätsunterlage (14) macht, die man in einem Massenspeicher speichert und dem Identifizierungsbild (17) zuordnet.

16. Verfahren nach einem der Ansprüche 10 bis 14, **dadurch gekennzeichnet, dass** man auf mindestens einem Kassiersystem mittels einer digitalen Prüfkamera (9) nach dem Lesen der Codes auf den gekauften Artikeln Aufnahmen von den Artikeln macht, und dass man diese digitale Prüfkamera (9) für die Erfassung des Identifikationsbilds (17) verwendet.
